# EUROPÄISCHE PATENTANMELDUNG

(11) **EP 3 786 505 A1**
(43) Veröffentlichungstag der Anmeldung: **03.03.2021**
(21) Anmeldenummer: 20189412.8
(22) Anmeldetag: 04.08.2020
(51) Int. Cl.: F16L 13/08, B23K 1/00, F02M 55/00

(54) **STECKKUPPLUNG FÜR FLUIDLEITUNGEN**

(30) Priorität: 30.08.2019 DE 102019213163
(71) Anmelder: ContiTech Techno-Chemie GmbH, 61184 Karben (DE)
(72) Erfinder: Zahradnik, Stefan - c/o Continental AG, 30419 Hannover (DE)
(74) Vertreter: Continental Corporation

(57) **Zusammenfassung**

Die Erfindung betrifft eine Metallische Fluidleitung (10) mit einer Anschlussvorrichtung (1), wobei die Anschlussvorrichtung (1) mindestens eine Bohrung (7) aufweist und die metallische Fluidleitung (10) mit der Anschlussvorrichtung (1) derart fluiddicht verlötet ist, dass ein Fluid von der Fluidleitung (10) durch die mindestens eine Bohrung (7) der Anschlussvorrichtung (1) hindurch leitbar ist. Der Erfindung lag die Aufgabe zugrunde, eine Fluidleitung (10) der eingangs geschilderten Art zu schaffen, die ohne großen Aufwand auch beim Einsatz an Verbindungen mit kleinen Durchmessern ein zuverlässiges Zurückhalten überschüssigen Lotes (11) ermöglicht. Diese Aufgabe wird dadurch gelöst, dass die Anschlussvorrichtung (1) einen von der Bohrung (7) durchdrungenen Anschlussstutzen (6) und einen radial um den Anschlussstutzen (6) herum angeordneten ringförmigen Lötspalt (9) aufweist, wobei die Fluidleitung (10) in den Lötspalt (9) eingesteckt und dort axial endseitig (8) fluiddicht mit der Anschlussvorrichtung (1) verlötet ist.

## Beschreibung

Die Erfindung betrifft eine metallische Fluidleitung mit einer Anschlussvorrichtung, wobei die Anschlussvorrichtung mindestens eine Bohrung aufweist und die metallische Fluidleitung mit der Anschlussvorrichtung derart fluiddicht verlötet ist, dass ein Fluid von der Fluidleitung durch die mindestens eine Bohrung der Anschlussvorrichtung hindurch leitbar ist.

Derartige Fluidleitungen werden häufig als Ölleitungen zur Schmierung von Aggregaten, wie beispielsweise Verbrennungsmotoren eingesetzt. Dabei ist es häufig zweckmäßig, den Öldurchfluss zu drosseln, sodass die mindestens eine Bohrung in der Anschlussvorrichtung dann als Drosselbohrung mit einem relativ kleinen Durchmesser, beispielsweise ca. 2,5 mm ausgebildet ist.

Das Anlöten der Fluidleitung an die Anschlussvorrichtung geschieht häufig in Durchlauföfen, wobei eine Lage der Bauteile in beliebiger Raumrichtung vorkommen kann. Daher ist bei den genannten kleinen Durchmessern der Drosselbohrung ein Zusetzen der Bohrung mit Lot nicht immer vermeidbar, was zum Ausfall der Aggregateschmierung führen kann.

Das auffangen überschüssigen Lotes bei Lötverbindung in ist beispielsweise mit entsprechenden Einstichen, Nuten oder ähnlichem möglich, in denen sich das überschüssige Lot in flüssigem Zustand sammelt. In der EP 24 27 767 A1 ist eine derartige Lötverbindung offenbart. Diese Lösung ist jedoch nicht geeignet, um in einem Durchlaufofen in beliebiger Position die Bauteile zuverlässig miteinander zu verbinden.

Es ist auch möglich, die Menge des eingesetzten Lotes sehr genau vorzubestimmen, sodass eine zum Zusetzen von Bohrungen ausreichende Menge Lot nicht zur Verfügung steht. Eine derartige Lösung ist in der DE 16 25 931 A1 offenbart. Dies jedoch mit erheblichem Vorbereitungsaufwand verbunden und insbesondere beim Einsatz der Verbindung mit kleinen Durchgangsdurchmessern aufgrund der dabei besonders großen Kapillarwirkung nicht immer zuverlässig.

Der Erfindung lag die Aufgabe zugrunde, eine Fluidleitung der eingangs geschilderten Art zu schaffen, die ohne großen Aufwand auch beim Einsatz an Verbindungen mit kleinen Durchmessern ein zuverlässiges Zurückhalten überschüssigen Lotes ermöglicht.

Diese Aufgabe wird dadurch gelöst, dass die Anschlussvorrichtung einen von der Bohrung durchdrungenen Anschlussstutzen und einen radial um den Anschlussstutzen herum angeordneten ringförmigen Lötspalt aufweist, wobei die Fluidleitung in den Lötspalt eingesteckt und dort axial endseitig fluiddicht mit der Anschlussvorrichtung verlötet ist.

Der Anschlussstutzen ragt auf diese Weise in das Innere der Fluidleitung hinein, sodass die Mündung der Bohrung vom Ende der Fluidleitung beabstandet ist. Da die Lötung im Bereich des eingesteckten Endes der Fluidleitung erfolgt, kann zwar beim Verlöten Lot in dem Lötspalt in das Innere der Fluidleitung kriechen, jedoch ist bei entsprechender Länge des Anschlussstutzens ein Zusetzen der Bohrung deutlich erschwert.

In einer Weiterbildung der Erfindung ist der Anschlussstutzen konisch ausgebildet, wobei der größere Durchmesser des konischen Anschlussstutzens dem eingesteckten Ende der Fluidleitung zugeordnet ist.

Durch die konische Form des Lötspalt erweitert sich dieser in Richtung von der Lötstelle weg. Die Aufnahmefähigkeit für überschüssiges Lot steigt daher mit zunehmender Entfernung von der Lötstelle.

In einer Weiterbildung der Erfindung weist der konische Anschlussstutzen an seiner der Fluidleitung zugewandten Mantelfläche mindestens eine Ringnut auf.

Die Ringnuten hemmt den Fluss überschüssigen Lotes weiter, sodass eine höhere Sicherheit gegen Zusetzen der Bohrung gegeben ist.

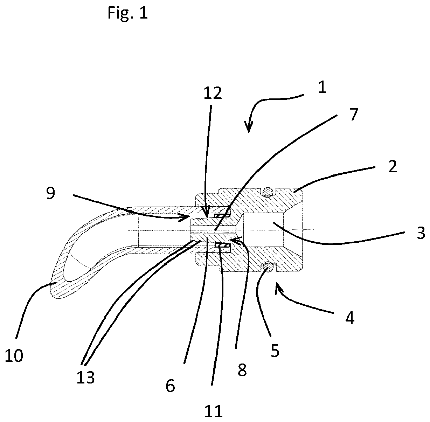

Anhand der Zeichnung wird nachstehend ein Beispiel der Erfindung näher erläutert. Die Figur 1 zeigt eine erfindungsgemäße Anschlussvorrichtung 1 in einem Längsschnitt. Die Anschlussvorrichtung 1 weist einen Grundkörper 2 auf. Der Grundkörper 2 weist eine Ein-/Auslassbohrung 3 auf.

Der Grundkörper 2 weist weiter eine Ringnut 4 auf, in der eine O-Ring-Dichtung 5 angeordnet ist. Diese Anordnung ist beispielsweise dazu geeignet, in eine korrespondierende Aufnahmebohrung eines hier nicht gezeigten, mit Fluid zu versorgenden Aggregates eingesteckt zu werden.

An der der Ein-/Auslassbohrung 3 gegenüberliegenden Seite der Anschlussvorrichtung 1 ist an dem Grundkörper 2 ein Anschlussstutzen 6 angeordnet, der durch eine Drosselbohrung 7 durchdrungen ist, wobei die Drosselbohrung 7 an ihrem ersten Ende in die Ein-/Auslassbohrung 3 mündet.

Der Anschlussstutzen 6 ist konisch ausgebildet, wobei sein größter Durchmesser den Stutzenfuß 8 bildet, der der Seite des Grundkörpers 2 zugeordnet ist, die die Ein-/Auslassbohrung 3 aufweist.

Um den Anschlussstutzen 6 herum ist ein Lötspalt 9 angeordnet, in dem ein Fluidleitungs-Rohrabschnitt 10 eingesteckt ist. Ein Lötmittelring 11 ist im Bereich des Stutzenfußes 8 zwischen dem Anschlussstutzen 6 unter Fluidleitung 10 eingelegt. Statt des Lötmittelrings 11 kann der Bereich des Stutzenfußes 8 auch mit einer hier nicht gezeigten Lötpaste bepastet sein.

Der Anschlussstutzen 6 weist an seiner der Fluidleitung 10 zugewandten Mantelfläche 12 zwei Ringnuten 13 auf, die als Fließbremse vorgesehen sind.

Die Anschlussvorrichtung 1 ist in der dargestellten Weise für eine Lötung in einem hier nicht gezeigten Durchlauf-Lötofen vorbereitet. Beim Durchlauf durch den nicht gezeigten Durchlauf-Lötofen verflüssigt sich der Lötmittelring 11, wodurch die Fluidleitung 10 und die Anschluss Richtung 1 fest und fluiddicht miteinander verbindbar sind.

Sollte bei diesem Vorgang das verflüssigte Lötmittel 11 in dem Lötspalt 9 in die Fluidleitung 10 fließen, ist dieser Fluss durch die steigende Breite des Lötspaltes 9 und die Fließbremsen 13 begrenzbar. Auf diese Weise kann verhindert werden, dass das Lötmittel 11 die Drosselbohrung 7 erreicht, sodass diese vom Lötmittel 11 nicht zugesetzt werden kann.

### Bezugszeichenliste

### (Teil der Beschreibung)

- 1: Anschlussvorrichtung
- 2: Grundkörper der Anschlussvorrichtung 1
- 3: Ein-/Auslassbohrung des Grundkörpers 2
- 4: Ringnut
- 5: O-Ring-Dichtung
- 6: Anschlussstutzen
- 7: Bohrung, Drosselbohrung
- 8: Stutzenfuß des Anschlussstutzens 6
- 9: Lötspalt
- 10: Fluidleitung
- 11: Lötmittelring, Lötmittel
- 12: Mantelfläche des Anschlussstutzens 6
- 13: Ringnut auf der Mantelfläche 12, Fließbremse

## Patentansprüche

1. Metallische Fluidleitung (10) mit einer Anschlussvorrichtung (1), wobei die Anschlussvorrichtung (1) mindestens eine Bohrung (7) aufweist und die metallische Fluidleitung (10) mit der Anschlussvorrichtung (1) derart fluiddicht verlötet ist, dass ein Fluid von der Fluidleitung (10) durch die mindestens eine Bohrung (7) der Anschlussvorrichtung (1) hindurch leitbar ist, **dadurch gekennzeichnet, dass** die Anschlussvorrichtung (1) einen von der Bohrung (7) durchdrungenen Anschlussstutzen (6) und einen radial um den Anschlussstutzen (6) herum angeordneten ringförmigen Lötspalt (9) aufweist, wobei die Fluidleitung (10) in den Lötspalt (9) eingesteckt und dort axial endseitig (8) fluiddicht mit der Anschlussvorrichtung (1) verlötet ist.

2. Metallische Fluidleitung (10) nach Anspruch 1, **dadurch gekennzeichnet, dass** der Anschlussstutzen (6) konisch ausgebildet ist, wobei der größere Durchmesser (8) des konischen Anschlussstutzens (6) dem eingesteckten Ende der Fluidleitung (10) zugeordnet ist.

3. Metallische Fluidleitung (10) nach Anspruch 2, **dadurch gekennzeichnet, dass** der konische Anschlussstutzen (6) an seiner der Fluidleitung (10) zugewandten Mantelfläche (12) mindestens eine Ringnut (13) aufweist.
